# EUROPEAN PATENT APPLICATION

(11) **EP 4 650 767 A1**
(43) Date of publication of application: **19.11.2025**
(21) Application number: 25161795.7
(22) Date of filing: 05.03.2025
(51) Int. Cl.: G01N 27/904

(54) **INSPECTION SYSTEM AND METHOD USING EDDY CURRENT SENSOR ARRAY**

(30) Priority: 15.05.2024 IN 202411038190; 23.12.2024 US 202418999783
(71) Applicant: General Electric Company, Cincinnati, Ohio 45215 (US)
(72) Inventor: KUMAR KM, Manoj, 560066 Bengaluru (IN); SHEILA VADDE, Aparna Chakrapani, 560066 Bengaluru (IN); TRIVEDI, Deepak, Niskayuna, 12309 (US); THAPA, Prasad, 560066 Bengaluru (IN); MAITI, Soumyakanti, 560066 Bengaluru (IN)
(74) Representative: Openshaw & Co.

(57) **Abstract**

A sensor system (100) may include a sensor array (104) comprising a plurality of eddy current sensor elements, the sensor array (104) having a contact side and a mounting side opposite the contact side. The sensor system (100) may include a sensor mount (102) coupled to the mounting side of the sensor array (104). The sensor system (100) may include a biasing element (110) configured to bias the contact side of the sensor array (104) against an inspected surface of a component (202) and secure the sensor array (104) to the component (202) while the inspected surface moves relative to the sensor array (104) during data capture.

## Description

### CROSS-REFERENCE TO RELATED APPLICATION

This application claims priority to Indian Provisional Application No. 202411038190 filed May 15, 2024, which is incorporated herein by reference in its entirety.

### FIELD OF THE DISCLOSURE

The present subject matter relates generally to the inspection of components using an eddy current sensor for defect detection.

### BACKGROUND

Eddy current inspection is a technique for detecting discontinuities or flaws in the surface of components such as the components of a gas turbine engine. Eddy current techniques are based on the principle of electromagnetic induction in which eddy currents are induced within the component under inspection. The eddy currents are induced in the component by alternating magnetic fields created in a coil of an eddy current probe, referred to as a drive coil, when the probe is moved into proximity with the component under inspection. Changes in the flow of eddy currents are caused by the presence of a discontinuity or a crack in the test specimen. The eddy currents produce a secondary magnetic field which induces a voltage in the eddy current probe coil or in a separate sense coil in the eddy current probe which may be recorded for analysis. An eddy current machine operator may then detect and size flaws by monitoring and analyzing the recorded voltage signals.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1 illustrates an eddy current array probe (ECAP) assembly for component inspection in accordance with some embodiments of the present disclosure.
FIG. 2 illustrates the ECAP of FIG. 1 biased against an inspected component in accordance with some embodiments of the present disclosure.
FIG. 3 illustrates an ECAP assembly in accordance with some embodiments of the present disclosure.
FIG. 4 illustrates an array probe fixture in accordance with some embodiments of the present disclosure.
FIG. 5 illustrates a sensor array in accordance with some embodiments of the present disclosure.
FIG. 6 illustrates an array probe fixture in accordance with some embodiments of the present disclosure.
FIG. 7 illustrates an array probe fixture in accordance with some embodiments of the present disclosure.
FIG. 8 illustrates a sensor reading from a sensor array in accordance with some embodiments of the present disclosure.
FIGS. 9 and 10 are flow diagrams of signal analysis algorithms in accordance with some embodiments of the present disclosure.
FIG. 11 includes a block diagram of a processor-based device in accordance with some embodiments of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first," "second," "third," etc. may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "approximately," "almost," and "substantially" are not to be limited to the precise value specified. In some instances, the approximating language may correspond to the precision of an instrument for measuring the value. For example, the approximating language may refer to being within a 1, 2, 4, 10, 15, or 20 percent margin. These approximating margins may apply to a single value, either or both endpoints defining numerical ranges, and/or the margin for ranges between endpoints. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Eddy Current Array Probes (ECAPs) can be used for detecting flaws in material, such as surface defects on turbine engine components. For robust inspection of very small flaws (e.g., <20mils long) using ECAPs, it is desirable to minimize and maintain lift-off in the order of tens of microns to maximize signal-to-noise ratio (SNR) and avoid confounding signals. It is also desirable to have minimal friction between the probe surface and the inspected part to avoid noise due to jerky movements and to prevent frequent probe damage and/or replacement to improve productivity and minimize cost. Defect detection can further be enhanced by having a sufficient number of redundant signal inputs to qualify the outputs as true indications against false indications. When large components or parts are inspected for small flaws using ECAPs, the aforesaid aspects need to be addressed for robust flaw detection. This may be difficult to achieve through conventional ECAP.

Additionally, one problem with inspecting the surface of a contoured workpiece with an eddy current array is to maintain the array in conformance and/or contact with the surface, as the eddy current device or probe is scanned across the surface, and to cause each of the pluralities of drive and sense elements comprising the eddy current array to be maintained at their respective substantially constant distances from the inspection surface during scanning. Additionally, workpiece geometries may vary from one component to another because of manufacturing process variability. Variation in the distance between the drive and sense elements and the inspection surface or a gap between the probe and the inspection surface as the probe is scanned across the surface is referred to as liftoff and is undesirable. Accordingly, there is a need for an eddy current array probe that can maintain an eddy current array in contact with a part feature.

Embodiments of the eddy current probe assembly disclosed herein may be robust to wear and damage and help to improve productivity as it eliminates frequent probe replacement and calibration. False indications (e.g., false defects) are also reduced by maintaining a zero or near zero lift-off with a part being inspected while also managing a frictionless/low-friction relative motion between the probe and the inspection part and/or surface.

Embodiments of the disclosed probe assembly combined with a signal analysis algorithm address the above-mentioned aspects by leveraging a flexible and conformable ECAP with a specialized sensor mount and biasing element. An example flexible ECAP is described in US Patent No. 7,948,233, the entirety of which is incorporated herein by reference. The ECAP may be used for engine component inspection, such as the inspection of surface defects on turbine engine components. The ECAP may move relative to the inspected part to perform inspection. In some embodiments, the ECAP may be stationary while a cylindrical part (e.g., engine spool) rotates in place. In some embodiments, the ECAP may be mounted on a positioning system (e.g., gantry, crane) and move (e.g., rotate) about the inspected part.

Referring now to the drawings wherein identical numerals indicate the same elements throughout the figures.

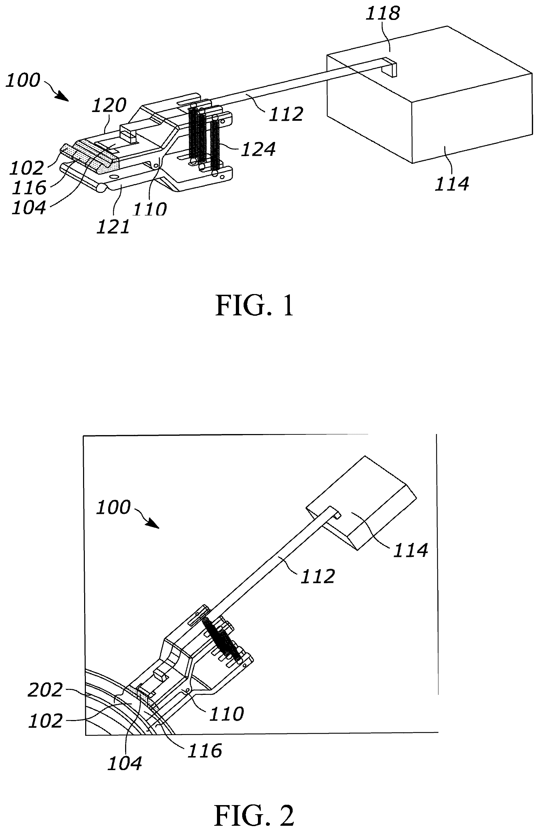

FIG. 1 illustrates a sensor system 100 in accordance with some embodiments. The sensor system 100 includes a sensor array 104, a sensor mount 102, a biasing element 110, friction reduction material 116, a connector 112, and a signal processor 118.

The sensor array 104 generally includes a sensor that captures data of the part and/or component to be inspected. The sensor array 104 may include a plurality of eddy current sensor elements. In some embodiments, the eddy current sensor elements are on a flexible substrate, effectively forming a flexible eddy current array probe (ECAP). Further, the shape of the sensor array 104 may conform to a nonplanar surface of the sensor mount 102. In some embodiments, the sensor array 104 is a thin flexible omni-directional eddy current array probe (OMNI ECAP). In some embodiments, the eddy current sensor elements may be arranged in a plurality of rows with sensor elements in each row being offset from sensor elements in an adjacent row. In some embodiments, the eddy current sensor elements may be arranged in a plurality of layers with sensor elements in each layer being offset from sensor elements in an adjacent layer. There may be any combination of layers and rows of sensor elements in the sensor array 104. The sensor array 104 includes a contact side for contacting the inspected component, and a mounting side for mounting to a sensor mount 102.

The sensor mount 102 includes a surface that conforms to the geometry of the part/component to be inspected. In some embodiments, the sensor mount 102 includes a non-planar surface and the sensor array 104 is coupled to the non-planar surface of the sensor mount 102 that conforms to a contour of the surface being inspected. In some embodiments, the sensor mount 102 is shaped to be inserted into a groove of the component and the inspected surface is a side wall of the groove. For example, for a sensor system 100 for inspecting a spool of a turbine engine, the sensor mount 102 may be shaped to be inserted into the spool grooves. The sensor mount 102 may include plastics and/or other rigid or semi-rigid materials suitable for mounting a sensor array 104 and inspecting a part of the component.

The contact side of the sensor array 104 may be covered in a friction reduction material 116 to reduce the friction during the relative movement of the sensor array 104 and the inspected surface. The friction reduction material 116 can maintain close to zero or minimal friction between the sensor array 104 and inspection surface to increase detection accuracy and reduce probe damage. In some embodiments, the friction reduction material 116 may be protective tape, such as a Polytetrafluoroethylene (PTFE) tape, disposed on the surface of the sensor array 104 that contacts the component being inspected. In some embodiments, the sensor array 104 is affixed to the negative profile of the sensor mount 102 using the friction reduction material 116, such as the PTFE tape. The sensor array 104 may be affixed such that the mounting side of the sensor array 104 is in contact with the sensor mount 102 while the contact side of the sensor array 104 is at least partially covered by the friction reduction material 116. In some embodiments, the friction reduction material 116 may be attached to the sensor array 104 via an adhesive. In some embodiments, the friction reduction material 116 includes Polytetrafluoroethylene (PTFE), Polyetheretherketone (PEEK), and/or Ultra-high-molecular-weight polyethylene (UHMW).

The sensor mount 102, sensor array 104, and friction reduction material 116 (such as PTFE tape) together shapes a contact surface that has a negative profile and/or shape of the component to be inspected. Once the negative profile and/or shape of the component is formed, the biasing element 110 holds the negative profile and/or shape of the component in place to perform inspection.

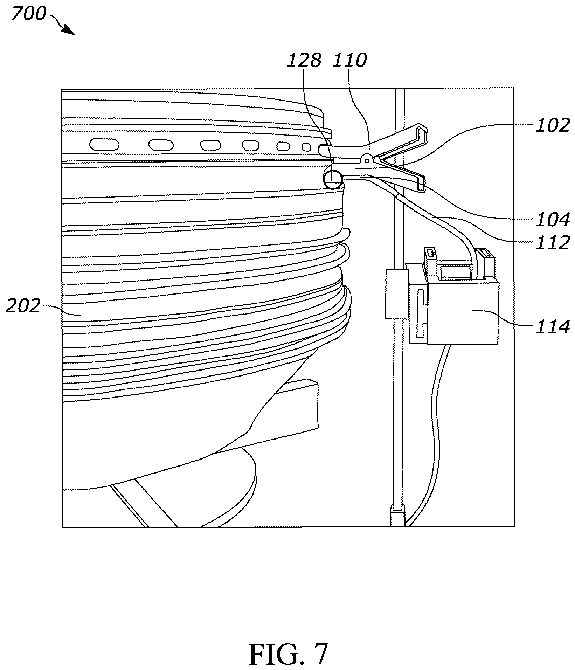

The biasing element 110 is generally configured to bias the contact side of the sensor array 104 against an inspected surface of a component, and to secure the sensor array 104 to the component while the inspected surface moves relative to the sensor array 104 during data capture. In some embodiments, the biasing element 110 secures the sensor array 104 by applying pressure between the sensor array 104 and the inspected surface such that the sensor array 104 maintains contact with the inspected surface/component during the rotation of the component and/or the sensor array. In some embodiments, the biasing element 110 applies contact pressure and maintains lift-off of the order of a few microns between the sensor array 104 and the component and/or surface to be inspected. The spring stiffness and the pre-load of the biasing element 110 may be chosen to optimize SNR and sensor wear rate. In some embodiments, the biasing element 110 includes a first arm 120 coupled to the sensor mount 102, a second arm 121 moveable (e.g., pivotable) relative to the first arm 120, and a tension element 901 (e.g., spring) configured to bias the first arm 120 and the second arm 122 towards each other or away from each other to secure the sensor array 104 to the component. In FIG. 1, the biasing element 110 is a spring-loaded reverse clamp that opens within a groove of the component to apply pressure on opposite walls of the groove to wedge/secure the sensor array 104 to the component. In some embodiments, the biasing element 110 may be a spring-loaded clamp with two arms that clips onto two sides of a ridge/wall of an inspected component to secure the sensor array 104 to the component. In some embodiments, a second sensor array is coupled to a second sensor mount on the second arm of the biasing element 110. The second sensor array may be biased against a second inspected surface of the component via the tension element such that data may be simultaneously captured from two inspected surfaces (e.g., two side walls of a groove). In some embodiments, the sensor system 100 may include two, three, four, or more sensor mounts configured to simultaneously inspect multiple surfaces (e.g., multiple grooves on an engine spool). The tension element may include a compression spring, an extension spring, a flat spring, a bolt fastener, a threaded fastener, an inflatable membrane, a shape memory material, or a solid foam. In some embodiments, the biasing element 110 may include an inflatable membrane configured to be inserted into an opening/groove of the component and inflated to bias the sensor array 104 against the inspected surface. In some embodiments, the sensor system 100 includes a roller positioned to contact and roll along a surface of the component not being inspected during data capture. The roller may extend from a side, top, or bottom of the sensor mount 102 to increase the stability of the sensor array 104 during the relative movement of the sensor mount 102 and the inspected component. An example of a roller 128 is shown in FIG. 7.

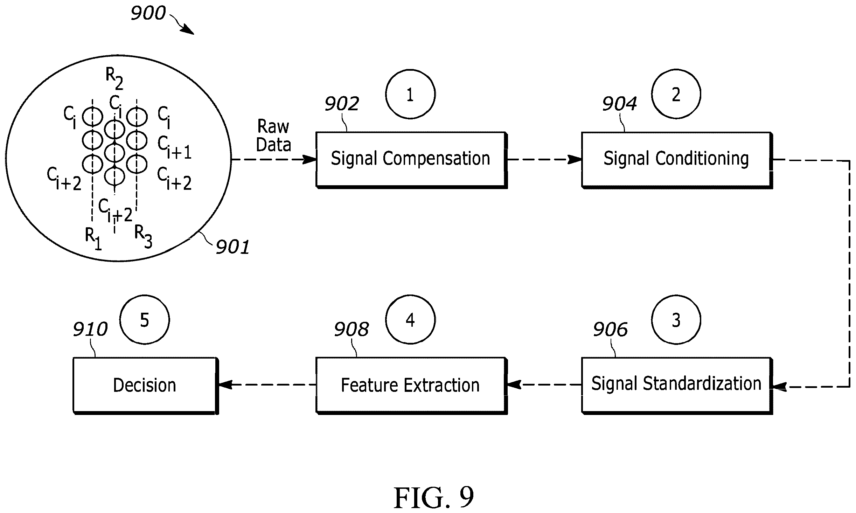

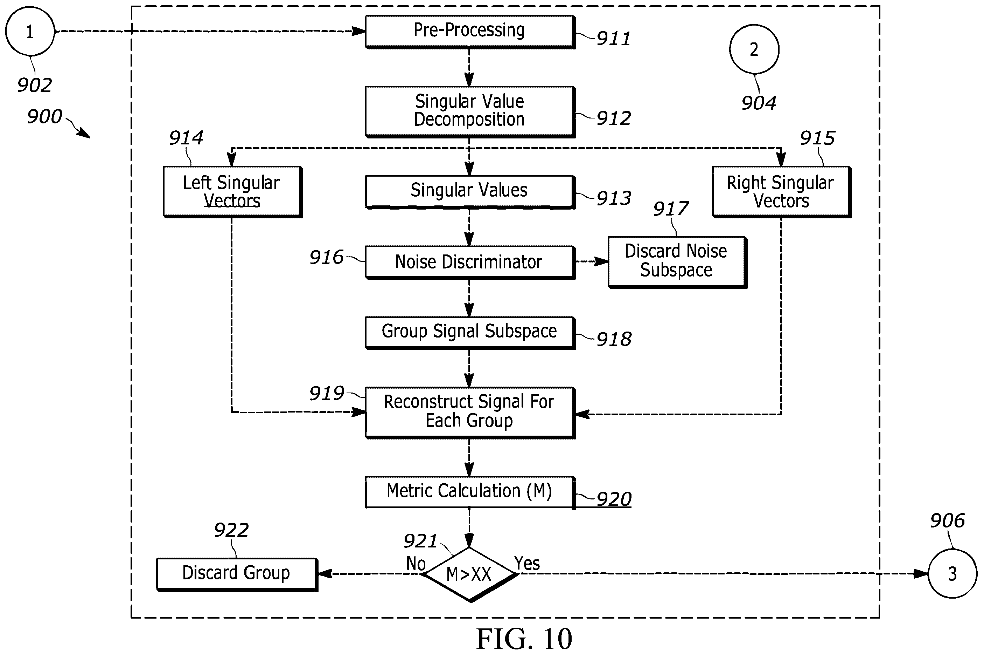

The sensor array 104 may be connected to a signal processor 118 via a connector 112 and associated cables. The connector 112 may be coupled between the sensor array 104 and the signal processor 118 for transmitting signals from the sensor array 104 to the signal processor 118 for defect detection of the component being inspected. In some embodiments, power may also be provided to the sensor array 104 via the connector 112. The connector 112 may be any connector suitable for transmitting signals from the sensor array 104 to the Eddy current instrument and signal processor 118. The instrument may include a control circuit and/or processor. The signal processor 118 can be implemented through one or more processors, controllers, central processing units, logic, software and the like. The signal processor 118 may further include memory which can be accessed by the signal processor 118, and the memory typically includes one or more processor-readable and/or computer-readable media accessed by at least the signal processor 118, and can include volatile and/or nonvolatile media, such as RAM, ROM, EEPROM, flash memory and/or other memory technology. The memory can store code, software, executables, scripts, data, content, lists, programming, programs, log or history data, user information, component information, defect information, and the like. Signals from the sensor array 104 may be transmitted to the signal processor 118 and onto a user device, such as a laptop or computer, for data processing and display. The instrument and signal processor 118 may be housed in a controller housing 114 to partially encase the instrument and signal processor 118, and the controller housing 114 may be coupled with the biasing element 110 and/or sensor mount 102. The controller housing 114 may include plastics and/or other materials suitable for housing the instrument and signal processor 118. In some embodiments, the signal processor 118 is configured to perform one or more steps described with reference to FIGS. 9 and 10 herein.

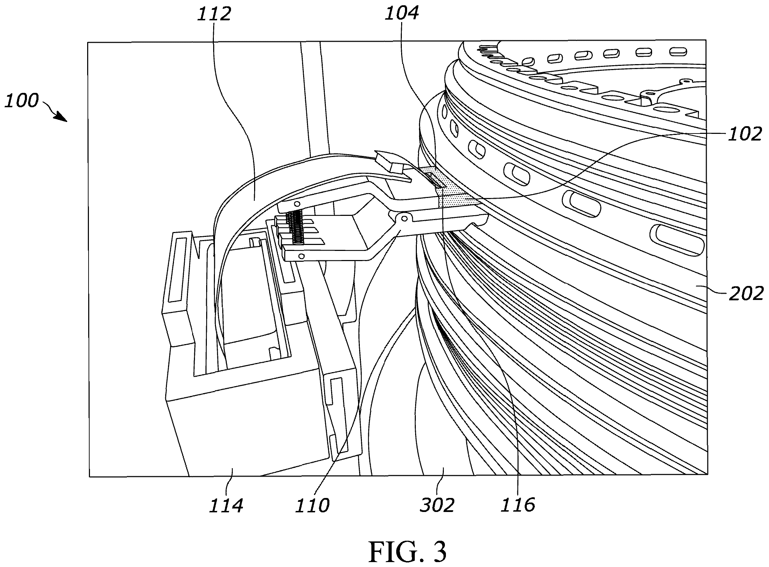

FIGS. 2 and 3 illustrate the sensor system 100 assembly of FIG. 1 biased against a component 202 being inspected. Specifically, the sensor system 100 clips onto a rotating a spool of a turbine engine. The same part numbers in these figures refer to the same parts in FIG. 1 and descriptions of which are not repeated herein. FIG. 3 shows the sensor system 100 further including a movable platform 302. The movable platform 302 may cause relative movement between the component 202 and the biasing element 110, along with the sensor array 104 and the sensor mount 102, and the relative movement of the movable platform 302 may be linear and/or rotational movement. In some embodiments, the movable platform 302 rotates a spool of a turbine engine during inspection of the turbine engine. The movable platform 302 may include any combination of manual and mechanical components. In some embodiments the movable platform 302 may be manually moved by an operator, while in other embodiments the movable platform 302 includes a motor which moves the movable platform 302. In some embodiments, the inspected component may be stationary and the sensor system 100 may move in a circular or linear motion to inspect a component surface.

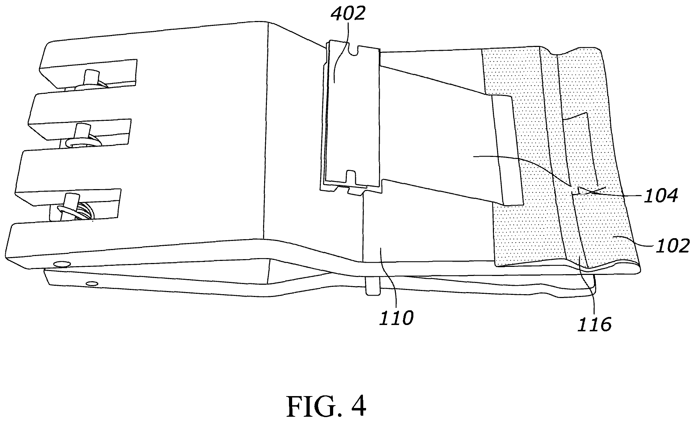

FIG. 4 shows a partial view of the sensor system 100 in accordance with some embodiments. The sensor system 100 includes the biasing element 110 and the sensor mount 102, and the sensor array 104 is coupled to the sensor mount 102 by friction reduction material 116. The mounting side of the sensor array 104 is coupled to the sensor mount 102, while the contact side is at least partially covered by the friction reduction material 116. The sensor array 104 further includes a coupling mechanism 402 to couple to a connector which communicatively connects the sensor array 104 to a signal processor, such as the signal processor 118. In some embodiments, the sensor array 104 is an OMNI ECAP, and the OMNI ECAP includes a flexible ECAP that is shaped by the sensor mount 102 to conform to the component 202 and/or the shape of the surface being inspected.

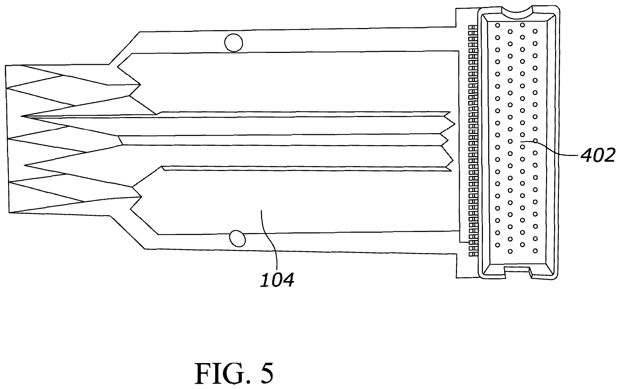

FIG. 5 shows an enlarged view of the sensor array 104. The sensor array 104 includes the coupling mechanism 402 which connects the sensor array 104 to the flexible connector 112 and subsequently the signal processor 118. The coupling mechanism 402 may be a ribbon connector, a multi-pin connector, and the like. The side of the sensor array 104 that is shown as upwards facing in FIG. 5 is the mounting side which may be in contact with a sensor mount such as sensor mount 102. The opposite side of the sensor array 104 that is shown as downwards facing in FIG. 5 is the mounting side which may be partially covered by a friction reduction material, such as the friction reduction material 116, and be the side of the sensor array 104 which comes in contact with a component 202 being inspected. The coupling mechanism 402 may be any suitable mechanism which couples the sensor array 104 to the connector 112 and allows data to be transferred from the sensor array 104 through the connector 112 and to the signal processor 118.

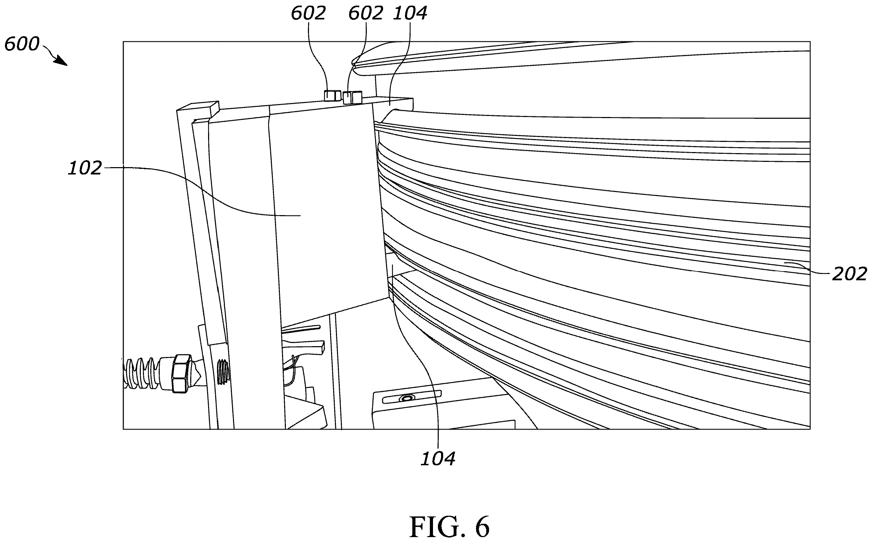

FIG. 6 illustrates a sensor system 600 in accordance with some embodiments. The sensor system 600 may be similar to and include components of the sensor system 100. For example, the sensor system 600, as shown in FIG. 6, includes two sensor arrays coupled to at least one sensor mount, which may be the sensor array 104 and the sensor mount 102 previously described. The first sensor array and the second sensor array may be configured to inspect two separate, spaced apart inspection surfaces on a component, such as the component 202, simultaneously. In some embodiments, a first sensor array is coupled to a first sensor mount, and a second sensor array is coupled to a second sensor mount. In alternate embodiments a first sensor array and a second sensor array are both coupled to the same sensor mount 102. The sensor system 600 further includes at least one tightening mechanism 602 functioning as a biasing element 110, which tightens the sensor mounts 102 into place such that the sensor arrays 104 are biased against the component 202. The at least one tightening mechanism 602 may, for example, be a screw and/or alternate suitable mechanism for tightening the sensor mounts 102 in place to secure the sensor arrays 104 to the inspected component.

FIG. 7 illustrates a sensor system 700 in accordance with some embodiments. The sensor system 700 may be similar to and include components of the sensor system 100. For example, the sensor system 700, as shown in FIG. 7, includes a biasing element 110, a sensor array 104, a sensor mount 102, a connector 112, a controller housing 114, and a component (202) being inspected. The biasing element 110 depicted in FIG. 7, is configured to clip onto a protrusion/wall of the component 202 rather than expand within a groove of the component 202 as depicted in FIGS. 1-3.

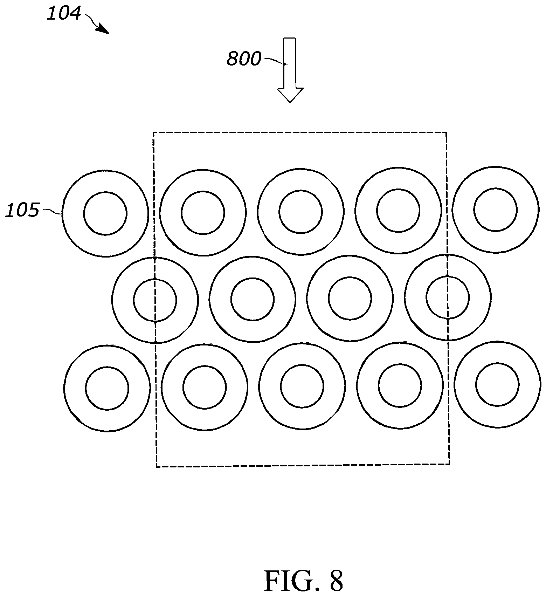

FIG. 8 is an illustration of a sensor array 104 according to some embodiments. The sensor array 104 may be an array of eddy current sensor coils 105. In Fig. 8, the direction of rotation is indicated by the arrow 800.

Each sensor element in the sensor array 104 may be of the order of a millimeter or less in diameter. Depending on the size and orientation of the indication, a defect can be detected by more than one sensor coil. In some embodiments, for every sensor element that detects an indication with, for example, an OMNI ECAP, there may be a 3x3 cluster (dashed line) of sensor elements in the sensor array 104 that can provide additional information. The amplitude and phase response patterns from the cluster can be used to distinguish between real indications and false indications. In some embodiments, the OMNI ECAP may provide information from greater than three adjacent sensor elements, within a few millimeters of each other, to compare and validate signals. Signals from a cluster of sensing elements may be compared and validated using the algorithms disclosed herein to determine if indications are true indications or false indications.

In embodiments where each row of the sensors is offset from one or more adjacent rows as shown in FIG. 8, the sensors may better capture defects having different orientations/angles, such as a defect/crack at a 45-degree angle relative to the direction of rotation.

In some embodiments, false indications are removed with an algorithm which uses adjacent or clustered sense coil outputs. For this, the algorithm may utilize the pattern of signals received from a specific cluster of sense elements over time to compensate for lift-off variations and also leverage the sense and drive coil layout and excitation method.

FIG. 9 is a flow chart of an algorithm 900 in accordance with some embodiments of the present disclosure. The algorithm 900 may be a signal analysis algorithm. The algorithm 900 may be a processor executable algorithm stored on a computer-readable storage medium, and the example algorithm can be stored and executed by the signal processor 118 of FIG. 1 and/or a processor remote from the sensor system 100. The algorithm 900 takes input signals from consecutive coils from each row (e.g., coill, coil2, coil3 for row1, row2, row3) to determine if a component's inspected surface has a defect. In some embodiments, raw sensor data is captured with an eddy current array probe (ECAP) while the ECAP is in relative motion with an inspected surface of a component. In some embodiments, the algorithm 900 may use data captured by the sensor system 100, 600, 700, and/or similar devices.

At block 902, raw data from a specific coil of the sensor array, which herein may be referred to as the reference coil, undergoes Step 1: signal compensation. At Step 1, the algorithm 900 creates a combined response of signals received from the neighboring coils relative to the reference coil. The combined response of signals may be a linear combination and/or a weighted combination of the signals, and the weights of either combination may be computed from calibration data. The weighted combined signal response may be considered a compensated signal of the reference coil. In some embodiments, a signal processor combines the raw sensor data from a plurality of sensor elements in the ECAP to obtain compensated sensor data.

At block 904, the compensated signal undergoes Step 2: signal conditioning. The compensated signal output of each reference coil can be taken to the signal conditioning stage. In the signal conditioning stage, a numerically meaningful signal can be extracted from the compensated signal by the utilization of one or more signal conditioning methods such as bandpass filtering or singular spectrum analysis. The numerically meaningful signal may be considered a conditioned signal of the reference coil.

At block 906, the conditioned signal undergoes Step 3: signal standardization. The conditioned signal for each reference coil is standardized to zero mean and unit variance signal resulting in a standardized signal of the reference coil. In some embodiments, the conditioned sensor data is standardized prior to the identification of defects.

At block 908, the standardized signal undergoes Step 4: feature extraction. Feature extraction techniques are used on the standardized signal to identify a desired feature of the component pertinent to the nature of the defect. The desired feature extracted may be considered an extracted signal of the reference coil.

At block 910, the extracted signal undergoes Step 5: decision. At Step 5, a decision is made on whether a relevant defect indication is present or is not present from the extracted signals. If the desired feature is not detectable from the extracted signal, the component may not have a defect. If the desired feature is detectable from the extracted signal, the component may have a defect. The algorithm 900 may include a range of variation between the desired feature and the extracted signal such that a pre-defined minimum amount of variation between the desired feature and extracted signal is required for the component to be considered as having a defect. A defect may be identified on an inspected surface based on the conditioned sensor data. In some embodiments, defects are identified via a feature extraction algorithm. The defects may be identified based on one or more characteristics of a feature identified via the feature extraction algorithm, and the one or more characteristics may include one or more of a length, width, orientation, and/or depth of the feature. Steps 1-5 described above may be repeated for each coil in the array for defect detection.

FIG. 10 shows one embodiment of Step 2 from FIG. 9 which uses the Singular Spectrum Analysis (SSA) approach.

In SSA, the temporal one-dimensional signal is represented in a two-dimensional matrix to apply singular value decomposition. Depending on the magnitude of singular values, a discrimination technique may be applied to discriminate the singular values corresponding to the signal subspace from the noise subspace. Amongst the singular values representing the signal subspace, unique groups can be formed with similar singular values, and following it, temporal one-dimensional signals corresponding to each group can be reconstructed using reconstruction algorithms. A suitable metric can be computed to down select the most suitable reconstructed signal to be used in feature extraction in Step 4 from FIG. 9. In one embodiment, the metric could be the energy in the signal.

Referring to FIG. 10, a compensated signal of the reference coil begins Step 2. The compensated signal first undergoes pre-processing at block 911, followed by singular value decomposition at block 912. In some embodiments, singular value decomposition is applied to the compensated sensor data to obtain left singular vectors 914, right singular vectors 915, and singular values 913. A noise discriminator 916 may remove noise subspace, to a discard noise subspace 917, from the singular values 913, and group any remaining singular values 913 into one or more signal subspace groups at a group signal subspace 918. At block 919, the signal for each group is reconstructed. The conditioned sensor data is reconstructed by combining the singular values 913 in the one or more signal subspace groups with the left singular vectors 914 and the right singular vectors 915. A metric calculation 920 is performed on the reconstructed signals to determine a value M from the signals. The metric calculation 920 determines a magnitude M associated with the condition sensor data for each signal subspace group. At block 921, if M > XX, M being the magnitude determined and XX being a pre-determined threshold value, is true, the algorithm 900 proceeds to Step 3 from FIG. 9. If M > XX is not true, the algorithm 900 discards the group at block 922. Signal subspace groups with magnitudes below a threshold are discarded prior to defect identification.

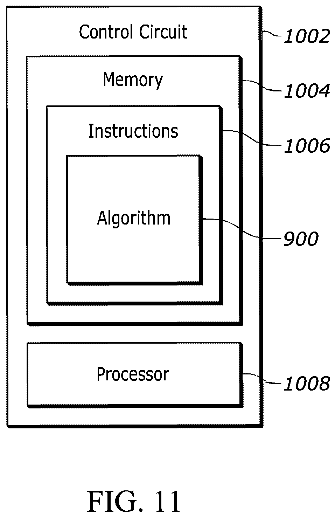

Referring now to FIG. 11, a non-transitory computer-readable medium for operating a computing device including a control circuit 1002 that includes a processor 1008, and a memory 1004 accessible by the processor 1008 and bearing instructions 1006 executable by the processor. When executed, the instructions 1006 may cause the steps of the algorithm 900 to be performed. The memory 1004, which can be accessed by the processor 1008, typically includes one or more processor-readable and/or computer-readable media accessed by at least the processor 1008, and can include volatile and/or nonvolatile media, such as RAM, ROM, EEPROM, flash memory and/or other memory technology. Further, the memory 1004 is shown as internal to the control circuit 1002; however, the memory 1004 can be internal, external or a combination of internal and external memory. The memory 1004 can store code, software, executables, scripts, data, content, lists, programming, programs, log or history data, user information, customer information, product information, and the like. The processor 1008 can include any suitable processors, microprocessors, central computing units, and so forth. The processor 1008 is able to access data and/or instructions 1006 stored within the memory 1004 to execute the instructions 1006. In some embodiments, the processor 1008 is the signal processor 118.

Embodiments of the sensor system and detection algorithm described herein improve the accuracy of eddy current sensor probes in surface defect detection. The sensor system disclosed herein further improves productivity as it eliminates frequent probe replacement and calibration. False indications (e.g., false defects) are also reduced by the detection algorithm as well as the sensor system that is configured to maintain a zero or near-zero lift-off with a surface being inspected while also managing a frictionless/low-friction relative motion between the probe and the inspection part and/or surface.

Further aspects of the disclosure are provided by the subject matter of the following clauses:
A method for inspecting a part with a contoured surface during relative motion between probe and part comprises: operatively coupling the part with an eddy current array probe assembly, the assembly comprising an array probe formed on a flexible substrate with a plurality of drive and sense elements patterned in one or more rows and/or in one or more layers on the flexible substrate; the assembly further comprising: a coating and/or an adhesive tape encapsulated on the top surface of the flexible substrate, and the flexible substrate coupled using a compliant adhesive film to a spring-loaded fixture with a negative geometric profile of the part to be inspected; inducing eddy currents in the part through the drive elements in the probe; receiving the eddy current signals from the probe assembly through the sense elements; processing the received real and imaginary part of the signals from a cluster of sense elements, to distinguish between a true or false indication of a feature of a defect in the coupled location of the part; wherein the cluster of sensor elements used for the comparison comprises one or more of the neighboring sense elements in the patterned rows laid offset from one another in the lateral and the axial direction.

The method of any preceding clause, further comprising: optimizing the stiffness and the pre-load of the spring to provide a constant proximity and contact pressure between the contoured surface of the part to be inspected and the surface of the array probe, during relative motion.

The method of any preceding clause, wherein the processing step comprises, removing the baseline noise through signal conditioning of the raw data.

The method of any preceding clause, comprising the step wherein the true or false defect indication at a location in the part is determined by correlating the features of the signal including phase angles received from the individual sense elements in the cluster.

The method of any preceding clause, wherein neighboring sense elements in the cluster are laid out, such that different elements may interact with the feature of interest, during inspection.

A system for inspecting a part with a contoured surface during relative motion, comprises: an eddy current array probe assembly operatively coupled with the part, the assembly comprising an array probe formed on a flexible substrate with a plurality of drive and sense elements patterned in one or more rows and/or in one or more layers on the flexible substrate; the assembly further comprising: a coating and/or an adhesive tape encapsulated on the top surface of the flexible substrate, and the flexible substrate coupled using a compliant adhesive film to a spring-loaded fixture with a negative geometric profile of the part to be inspected; wherein eddy currents are induced in the part through the drive elements in the probe; wherein the eddy current signals are received from the probe assembly through the sense elements; wherein the received real and imaginary part of the signals from a cluster of sense elements are processed to distinguish between a true or false indication of a feature of a defect in the coupled location of the part; wherein the cluster of sense elements used for the comparison comprises one or all the adjacent sensor elements in the patterned rows laid offset from one another in the lateral and the axial direction.

The system of any preceding clause, wherein the stiffness and the pre-load of the spring are optimized to provide a constant proximity and contact pressure between the contoured surface of the part to be inspected and the surface of the array probe, during relative motion.

The system of any preceding clause, wherein the signals being processed comprises, the baseline noise being removed through signal conditioning of the raw data.

The system of any preceding clause, wherein the true or false defect indication at a location in the part is determined by correlating the features of the signal including phase angles received from the individual sensor elements in the cluster.

The system of any preceding clause, wherein neighboring sense elements in the cluster are laid out, such that different elements may interact with the feature of interest, during inspection.

A sensor system for component inspection, the sensor system comprising: a sensor array comprising a plurality of eddy current sensor elements, the sensor array having a contact side and a mounting side opposite the contact side; a sensor mount coupled to the mounting side of the sensor array; and a biasing element configured to bias the contact side of the sensor array against an inspected surface of a component and maintain constant lift-off of the sensor array to the component while the inspected surface moves relative to the sensor array during data capture.

The sensor system of any preceding clause, wherein the sensor array comprises the plurality of eddy current sensor elements on a flexible substrate, forming a flexible eddy current array probe (ECAP), and the shape of the sensor array conforms to a nonplanar surface of the sensor mount.

The sensor system of any preceding clause, wherein the plurality of eddy current sensor elements forms an omni-directional ECAP.

The sensor system of any preceding clause, wherein the plurality of eddy current sensor elements may be arranged in a plurality of rows, with sensor elements in each row being offset from sensor elements in an adjacent row.

The sensor system of any preceding clause, wherein the plurality of eddy current sensor elements may be arranged in a plurality of layers, with sensor elements in each layer being offset from sensor elements in an adjacent layer.

The sensor system of any preceding clause, wherein the plurality of eddy current sensor elements may be arranged in a plurality of layers and a plurality of rows, with sensor elements in each layer being offset from sensor elements in an adjacent layer and sensor elements in each row being offset from sensor elements in an adjacent row.

The sensor system of any preceding clause, wherein the sensor array is coupled to a non-planar surface of the sensor mount that conforms to a contour of the inspected surface.

The sensor system of any preceding clause, wherein the sensor mount is shaped to be inserted into a groove of the component and the inspected surface is a side wall of the groove.

The sensor system of any preceding clause, wherein the biasing element comprises: a first arm coupled to the sensor mount; a second arm moveable relative to the first arm; and a tension element configured to bias the first arm and the second arm towards each other or away from each other to secure the sensor array to the component.

The sensor system of any preceding clause, wherein the tension element comprises a compression spring, an extension spring, a flat spring, a bolt fastener, a threaded fastener, an inflatable membrane, a shape memory material, or a solid foam.

The sensor system of any preceding clause, further comprising a second sensor array coupled to a second sensor mount on the second arm of the biasing element, wherein the second sensor array is biased against a second inspected surface of the component via the tension element.

The sensor system of any preceding clause, further comprising a roller positioned to contact and roll along a surface of the component not being inspected during data capture.

The sensor system of any preceding clause, wherein the biasing element comprises an inflatable membrane configured to be inflated to bias the sensor array against the inspected surface.

The sensor system of any preceding clause, further comprising: a friction reduction material covering the contact side of the sensor array.

The sensor system of any preceding clause, wherein the friction reduction material comprises Polytetrafluoroethylene (PTFE), Polyetheretherketone (PEEK), or Ultra-high-molecular-weight polyethylene (UHMW).

The sensor system of any preceding clause, wherein the friction reduction material is attached to the sensor array via an adhesive, and the sensor array is affixed to the sensor mount via the friction reduction material and the adhesive.

The sensor system of any preceding clause, further comprising a movable platform for causing relative movement between the component and the biasing element, along with the sensor array and the sensor mount; wherein the relative movement is linear or rotational.

The sensor system of any preceding clause, further comprising a connector coupled between the sensor array and a signal processor to transmit signals from the sensor array to the signal processor for defect detection.

The sensor system of any preceding clause, wherein the component comprises an aircraft component and the sensor mount is shaped to conform to a surface of the aircraft component.

The sensor system of any preceding clause, wherein the component comprises a spool of a turbine engine, and wherein the spool to be rotated by a movable platform while the senor mount is stationary during inspection.

A method for component inspection, the method comprises: capturing raw sensor data with an eddy current array probe (ECAP) while the ECAP is in relative motion with an inspected surface of a component; combining, at a processor, the raw sensor data from a plurality of sensor elements in the ECAP to obtain compensated sensor data; applying singular value decomposition to the compensated sensor data to obtain left and right singular vectors and singular values; removing noise subspace from the singular values and grouping remaining singular values into one or more signal subspace groups; reconstructing conditioned sensor data by combining singular values in the one or more signal subspace groups with the left and right singular vectors; and identifying a defect on the inspected surface based on the conditioned sensor data.

The method of any preceding clause, comprising: determining a magnitude associated with the conditioned sensor data for each signal subspace group; and discarding signal subspace groups with magnitudes below a threshold prior to defect identification.

The method of any preceding clause, wherein the conditioned sensor data are standardized prior to the identification of defects.

The method of any preceding clause, wherein defects are identified via a feature extraction algorithm.

The method of any preceding clause, wherein the defects are identified based on one or more characteristics of a feature identified via the feature extraction algorithm, wherein the one or more characteristics comprise one or more of a length, a width, an orientation, or a depth of the feature.

The method of any preceding clause, wherein the ECAP comprises: a sensor array comprising a plurality of eddy current sensor elements, the sensor array having a contact side and a mounting side opposite the contact side; a sensor mount coupled to the mounting side of the sensor array; and a biasing element configured to bias the contact side of the sensor array against the inspected surface of the component and secure the sensor array to the component while the inspected surface moves relative to the sensor array during data capture.

A non-transitory computer-readable medium programmed with computer-executable instructions for operating a computing device including a control circuit that includes a processor, and a memory accessible by the processor and bearing instructions executable by the processor, wherein the instructions, when executed by the processor, implement a method for component inspection, the method comprising: capturing raw sensor data with an eddy current array probe (ECAP) while the ECAP is in relative motion with an inspected surface of a component; combining, at a processor, the raw sensor data from a plurality of sensor elements in the ECAP to obtain compensated sensor data; applying singular value decomposition to the compensated sensor data to obtain left and right singular vectors and singular values; removing noise subspace from the singular values and grouping remaining singular values into one or more signal subspace groups; reconstructing conditioned sensor data by combining the singular values in the one or more signal subspace groups with the left and right singular vectors; and identifying a defect on the inspected surface based on the conditioned sensor data.

A sensor system for component inspection, the sensor system comprising: a sensor array comprising a plurality of eddy current sensor elements, the sensor array having a contact side and a mounting side opposite the contact side; a sensor mount coupled to the mounting side of the sensor array; and a biasing element configured to bias the contact side of the sensor array against an inspected surface of a component and secure the sensor array to the component while the inspected surface moves relative to the sensor array during data capture.

The sensor system of any preceding clause, wherein the sensor array comprises the plurality of eddy current sensor elements on a flexible substrate, forming a flexible eddy current array probe (ECAP), and a shape of the sensor array conforms to a nonplanar surface of the sensor mount.

The sensor system of any preceding clause, wherein the plurality of eddy current sensor elements forms an omni-directional ECAP.

The sensor system of any preceding clause, wherein the plurality of eddy current sensor elements is arranged in a plurality of rows, with sensor elements in each row being offset from sensor elements in an adjacent row.

The sensor system of any preceding clause, wherein the plurality of eddy current sensor elements is arranged in a plurality of layers, with sensor elements in each layer being offset from sensor elements in an adjacent layer.

The sensor system of any preceding clause, wherein the sensor array is coupled to a non-planar surface of the sensor mount that conforms to a contour of the inspected surface.

The sensor system of any preceding clause, wherein the sensor mount is shaped to be inserted into a groove of the component and the inspected surface is a side wall of the groove.

The sensor system of any preceding clause, wherein the biasing element comprises: a first arm coupled to the sensor mount; a second arm moveable relative to the first arm; and a tension element configured to bias the first arm and the second arm towards each other or away from each other to secure the sensor array to the component.

The sensor system of any preceding clause, wherein the tension element comprises a compression spring, an extension spring, a flat spring, a bolt fastener, a threaded fastener, an inflatable membrane, a shape memory material, or a solid foam.

The sensor system of any preceding clause, further comprising a second sensor array coupled to a second sensor mount on the second arm of the biasing element, wherein the second sensor array is biased against a second inspected surface of the component via the tension element.

The sensor system of any preceding clause, further comprising a roller positioned to contact and roll along a surface of the component not being inspected during data capture.

The sensor system of any preceding clause, wherein the biasing element comprises an inflatable membrane configured to be inflated to bias the sensor array against the inspected surface.

The sensor system of any preceding clause, further comprising a friction reduction material covering the contact side of the sensor array.

The sensor system of any preceding clause, wherein the friction reduction material comprises Polytetrafluoroethylene (PTFE), Polyetheretherketone (PEEK), or Ultra-high-molecular-weight polyethylene (UHMW).

The sensor system of any preceding clause, wherein the friction reduction material is attached to the sensor array via an adhesive, and the sensor array is affixed to the sensor mount via the friction reduction material and the adhesive.

The sensor system of any preceding clause, further comprising a movable platform to cause relative movement between the component and the biasing element, along with the sensor array and the sensor mount; wherein the relative movement is linear or rotational.

The sensor system of any preceding clause, further comprising a connector coupled between the sensor array and a signal processor to transmit signals from the sensor array to the signal processor for defect detection.

The sensor system of any preceding clause, wherein the component comprises an aircraft component and the sensor mount is shaped to conform to a surface of the aircraft component.

The sensor system of any preceding clause, wherein the component comprises a spool of a turbine engine, and wherein the spool is to be rotated by a movable platform while the sensor mount is stationary during inspection.

A non-transitory computer-readable medium programmed with computer-executable instructions for operating a computing device including a control circuit that includes a processor, and a memory accessible by the processor and bearing instructions executable by the processor, wherein the instructions, when executed by the processor, implement a method for component inspection, the method comprising: capturing raw sensor data with an eddy current array probe (ECAP) while the ECAP is in relative motion with an inspected surface of a component; combining, at the processor, the raw sensor data from a plurality of sensor elements in the ECAP to obtain compensated sensor data; applying singular value decomposition to the compensated sensor data to obtain left and right singular vectors and singular values; removing noise subspace from the singular values and grouping remaining singular values into one or more signal subspace groups; reconstructing conditioned sensor data by combining the singular values in the one or more signal subspace groups with the left and right singular vectors; and identifying a defect on the inspected surface based on the conditioned sensor data.

## Claims

1. A sensor system (100) for component inspection, the sensor system (100) comprising:
a sensor array (104) comprising a plurality of eddy current sensor elements, the sensor array (104) having a contact side and a mounting side opposite the contact side;
a sensor mount (102) coupled to the mounting side of the sensor array (104); and
a biasing element (110) configured to bias the contact side of the sensor array (104) against an inspected surface of a component (202) and secure the sensor array (104) to the component (202) while the inspected surface moves relative to the sensor array (104) during data capture.

2. The sensor system (100) of claim 1, wherein the sensor array (104) comprises the plurality of eddy current sensor elements on a flexible substrate, forming a flexible eddy current array probe (ECAP), and a shape of the sensor array (104) conforms to a nonplanar surface of the sensor mount (102).

3. The sensor system (100) of any preceding claim, wherein the plurality of eddy current sensor elements forms an omni-directional ECAP.

4. The sensor system (100) of any preceding claim, wherein the plurality of eddy current sensor elements is arranged in a plurality of rows, with sensor elements in each row being offset from sensor elements in an adjacent row.

5. The sensor system (100) of any preceding claim, wherein the plurality of eddy current sensor elements is arranged in a plurality of layers, with sensor elements in each layer being offset from sensor elements in an adjacent layer.

6. The sensor system (100) of any preceding claim, wherein the sensor array (104) is coupled to a non-planar surface of the sensor mount (102) that conforms to a contour of the inspected surface.

7. The sensor system (100) of any preceding claim, wherein the sensor mount (102) is shaped to be inserted into a groove of the component (202) and the inspected surface is a side wall of the groove.

8. The sensor system (100) of any preceding claim, wherein the biasing element (110) comprises:
a first arm coupled to the sensor mount (102);
a second arm moveable relative to the first arm; and
a tension element configured to bias the first arm and the second arm towards each other or away from each other to secure the sensor array (104) to the component (202).

9. The sensor system (100) of claim 8, wherein the tension element comprises a compression spring, an extension spring, a flat spring, a bolt fastener, a threaded fastener, an inflatable membrane, a shape memory material, or a solid foam.

10. The sensor system (100) of claim 8 or 9, further comprising a second sensor array (104) coupled to a second sensor mount (102) on the second arm of the biasing element (110),
wherein the second sensor array (104) is biased against a second inspected surface of the component (202) via the tension element.

11. The sensor system (100) of any preceding claim, further comprising a roller positioned to contact and roll along a surface of the component (202) not being inspected during data capture.

12. The sensor system (100) of any preceding claim, wherein the biasing element (110) comprises an inflatable membrane configured to be inflated to bias the sensor array (104) against the inspected surface.

13. The sensor system (100) of any preceding claim, further comprising: a friction reduction material (116) covering the contact side of the sensor array (104).

14. The sensor system (100) of claim 13, wherein the friction reduction material (116) comprises Polytetrafluoroethylene (PTFE), Polyetheretherketone (PEEK), or Ultra-high-molecular-weight polyethylene (UHMW).

15. The sensor system (100) of claim 13 or 14, wherein the friction reduction material (116) is attached to the sensor array (104) via an adhesive, and the sensor array (104) is affixed to the sensor mount (102) via the friction reduction material (116) and the adhesive.
